# EUROPÄISCHE PATENTANMELDUNG

(11) **EP 0 873 797 A2**
(43) Veröffentlichungstag der Anmeldung: **28.10.1998**
(21) Anmeldenummer: 98890099.9
(22) Anmeldetag: 07.04.1998
(51) Int. Cl.: B07C 5/342, B07C 5/36

(54) **Verfahren zum Sortieren von Altpapier**

(30) Priorität: 23.04.1997 AT 246/97 U
(71) Anmelder: Binder & Co. Aktiengesellschaft, 8200 Gleisdorf (AT)
(72) Erfinder: Gschweitl, Karl Heinz, 8211 Grosspesendorf (AT)
(74) Vertreter: Kliment, Peter

(57) **Zusammenfassung**

Die Erfindung betrifft ein Verfahren zur Trennung von Altpapier und Altkarton, wobei diese ungeordnet auf einem Sortierband liegend zum Aussortieren transportiert werden. Um den Vorgang zu automatisieren und den händisch aussortierenden Arbeitnehmer von seiner monotonen Aufgabe zu entlasten, ist vorgesehen, daß das Altpapier und der Altkarton wahlweise mit Licht von unterschiedlicher Wellenlänge bestrahlt wird um so eine genaue Positionsangabe der auszusortierenden Kartonfraktionen zu erhalten, die dann maschinell aussortiert werden können.

## Beschreibung

Die Erfindung betrifft ein Verfahren zum Sortieren von Altpapier unterschiedlicher Qualität und Beschaffenheit, insbesonders von Altpapier und Altkarton gemäß Oberbegriff des Anspruch 1.

Papier, Karton und Pappe unterscheiden sich neben den Unterschieden in der Länge der Fasern, im Bleichungsgrad und in der Dicke. Es wird also im sprachlichen Gebrauch zwischen Papier, Karton und Pappe unterschieden. Bei Altpapier ist das anders. Unter dem Begriff Altpapier wird sowohl Altpapier in seinem wortwörtlichen Sinn als auch Altkarton und Altpappe verstanden.

In der Altpapiersammlung werden Papier, Karton und Pappe gemeinsam gesammelt. Zur Erzeugung von höherwertigen Recyclingpapieren ist es erforderlich, daß langfasrige Papierfraktionen und kurzfasrige Kartonfraktionen separiert werden. Dies geschieht derzeit durch das händische Aussortieren an Sortierbändern, auf denen der Altpapierstrom in die gewünschten Fraktionen getrennt wird.

Diese Art der Altpapiertrennung hat den Nachteil, daß es sich um eine sehr monotone und aufwendige Tätigkeit handelt, die die Arbeitnehmer am Sortierband sehr einseitig beansprucht.

Die Aufgabe der vorliegenden Erfindung besteht nun in der Schaffung eines Verfahrens zur Trennung von Altpapier, Altkarton und Altpappe, das automatisiert betrieben werden kann und somit die Trennkapazität steigert, Arbeitnehmer entlastet und sie für weniger monotone Arbeitsgänge einsetzbar macht.

Diese Aufgabe wird bei einem Verfahren der eingangs erwähnten Art durch die kennzeichnenden Merkmale des Anspruchs 1 erreicht.

Gemäß Anspruch 1 wird die unterschiedliche elektromagnetische Reflexionseigenschaft der Altpapierfraktionen dazu benutzt, diese lagemäßig auf dem Sortierband zu erfassen und dann mittels Aufnehmer auszusortieren, um sie an einem vorbestimmten Ablageplatz abzulegen. Dadurch entfällt das händische Aussortieren am Sortierband, da sowohl das Erkennen der jeweiligen Fraktionen als auch das Aussortieren automatisiert ist.

Gemäß Anspruch 2 wird das Sortierband kontinuierlich bewegt. Es ist jedoch auch möglich, daß Sortierband abwechselnd zu bewegen und anzuhalten, sodaß je nach Sortierbandbereich während des Stillstand dieses, in einem Bereich bestrahlt und in einem anderen Bereich die schon vorher bestrahlten und ausgewerteten Fraktionen aussortiert werden können. Dann wird das Sortierband weiterbewegt, bis jener Bereich, der soeben bestrahlt wurde in den Aussortierbereich bewegt wurde und neue Fraktionen in den Bestrahlungsbereich transportiert werden.

Das Sortierband ist im Bereich der Strahlungsquelle in mehrere fiktive Spuren geteilt, wodurch eine Zuordnung der auszusortierenden Altpapierfraktionen zu den Spuren ermöglicht wird. Jeder Spur ist ein Aufnehmer zugeordnet. Dadurch besitzt jeder Aufnehmer einen vordefinierten, kleinen Arbeitsbereich und die Verfahrenswege des Aufnehmers sind so sehr klein gehalten, damit ein rasches Aussortieren möglich ist. Außerdem kann es zu keiner Kollision zwischen den einzelnen Greifern kommen. Es ist jedoch auch möglich die Aufnehmer so anzuordnen, daß sie keinen bestimmten Bereich am Sortierband zugeordnet haben, sondern innerhalb der gesamten Breite des Sortierbandes arbeiten können. Diese Art der Anordnung empfiehlt sich vor allem für das diskontinuierliche Bewegen des Sortierbandes, kann aber auch im Falle der kontinuierlichen Bewegung des Sortierbandes verwendet werden.

Gemäß Anspruch 3 erreicht man durch ein mehrmaliges Anordnen der Verfahrensgruppen an einem Sortierband hintereinander, daß man verschiedene gewünschte Fraktionen aussortieren kann. So wird zum Beispiel in der ersten Bestrahlungs-, Auswerte-, Aufnehmer- und Ablegegruppe Altkarton aussortiert, während in der zweiten, darauffolgenden Gruppe Altpapierkuverts aussortiert werden.

Gemäß Anspruch 4 regelt ein Prozessor die Auswertung der durch die Kamera empfangen Daten des reflektierten Lichtes und ordnet dann der auszusortierenden Altpapierfraktion über eine Lagekoordinate eine Spur zu. Daraufhin aktiviert er einen dieser Spur zugeordneten Aufnehmer zum Aussortieren der Fraktion. Je nach Programm, das den Prozessor steuert ist es auch möglich Fremdstoffe innerhalb des Altpapiers, wie zum Beispiel Plastiksäcke oder Styropor, zu erkennen und auszusortieren.

Die Erfindung betrifft auch eine Vorrichtung zur Durchführung des Verfahrens.

Gemäß Anspruch 5 erfolgt eine Zusammenfassung von Strahlungsquelle und Auswertevorrichtung zu einem kompakten Modul. Dadurch wird sowohl die Befestigung über dem Sortierband als auch der Austausch der aufeinander abgestimmten Strahlungsquelle und Auswertevorrichtung erleichtert. Falls die Strahlungsquelle geändert werden soll, muß man somit nicht einzeln alle Strahlungsquellen und Auswertevorrichtungen demontieren und wieder neu montieren, sondern es kann auf vorbereitete aufeinander abgestimmte Module zurückgegriffen werden. Je kürzer der Abstand zwischen dem Modul und den nachgeordneten Aufnehmern gehalten wird, desto zügiger kann der gesamte Aussortierungsprozeß abgewickelt werden.

Die Strahlungsquelle kann gemäß Anspruch 6 elektromagnetische Wellen verschiedener Wellenlänge aussenden, wobei jede Altpapierfraktion diese unterschiedlich reflektiert.

Diese reflektierten Strahlen, können gemäß Anspruch 7 von der Auswertevorrichtung, die vorzugsweise eine Kamera ist, verarbeitet werden. Durch die Weiterleitung der Daten an den Prozessor erfolgt dann deren Auswertung. Die Kamera ist mit fixen oder automatisch wechselnden Filtern, je nach eingesetzter Wellenlänge, ausgestattet. Im ersten Fall werden mehrere Kameras, mindesten eine für jede Wellenlänge eingsetzt.

Die an die zentrale Prozessoreinheit weitergeleiteten Daten der Kamera dienen zur genauen Lagebestimmung der einzelnen Kartonfraktionen auf dem Sortierband und werden nach mehreren Kriterien ausgewertet, die von der Wellenlänge der eingesetzten Strahlung abhängt. Im Falle der Verwendung von normalem sichtbaren Licht, erkennt der Prozessor Gebiete mit großen homogenen Farbanteilen, zum Beispiel grauen oder braunen Kartons, gelber Kuverts und dergleichen und ermöglicht so die genaue Lagebestimmung der einzelnen Altpapier-, Altkarton und Altpappefraktionen. Auch Helligkeitsunterschiede können zur Lagebestimmung herangezogen werden. So können zum Beispiel schwach reflektierende Kartonteile erkannt werden.

Im Falle der Verwendung von ultraviolettem Licht werden gebleichte Fasern zum Aufleuchten gebracht und können somit vom Karton unterschieden werden.

Wird infrarotes Licht verwendet, so erscheinen gebleichte Fasern trotz Aufdruck durchsichtig, während Karton für Infrarot undurchsichtig ist.

Weiters kommt noch spezielles Licht zur Anwendung, das Weißmacher in Anstrichen von Papier zum Leuchten bringt, um es vom Karton zu unterscheiden.

Die Anordnung der Aufnehmer gemäß Anspruch 8 ermöglicht durch die dabei je Aufnehmer auftretenden kurzen Verfahrenswege, die in einer Ebene liegen, ein schnelles Greifen und Ablegen der Altpapierfraktionen. Damit sich die Aufnehmer beim Greifen von größeren Fraktionsteilen nicht gegenseitig behindern, ist es auch möglich sie entlang der einzelnen Spuren hintereinander versetzt anzuordnen. Die Aufnehmer können jedoch auch neben dem Sortierband angeordnet sein und mittels einer um eine zum Sortierband vertikalen Achse ausgeführten Schwenkbewegung, die Altpapierfraktionen auf einen Ablegeplatz transportieren. In diesem Fall sind die einzelnen Aufnehmer von unterschiedlicher Höhe ausgeführt.

Das Greifen auszusortierenden Altpapierstücke durch die Aufnehmer ist durch Anspruch 9 ermöglicht. Je nach Beschaffenheit der auszusortierenden Fraktion sind die Aufnehmer mit unterschiedlichen Greifvorrichtungen bestückt.

Der Ablageplatz ist vorzugsweise gemäß Anspruch 10 angeordnet. Die schon erwähnte kurze Aufeinanderfolge von Modul, Aufnehmer und Ablageplatz ermöglichen eine schnelle Abwicklung des Prozesses. Um für jeden Aufnehmer gleichgroße Verfahrenswege zu schaffen, ist der Ablageplatz in gleichem Winkel wie diese zum Sortierband angeordnet. Es ist jedoch auch möglich den Ablageplatz neben dem Sortierband oder in etwas größerem Abstand davon anzuordnen.

Um auch größere Altpapierstücke auf dem Ablageplatz ablegen zu können, ist die Anordnung von Klemmwalzen gemäß Anspruch 11 vorgesehen.

Im Folgenden wird die Erfindung an Hand eines in der Zeichnung dargestellten Ausführungsbeispieles näher beschrieben. Dabei zeigen:
Fig.1 eine Frontansicht einer erfindungsgemäßen Vorrichtung zum Trennen von Altpapier und Altkarton
Fig.2 einen Grundriß der Vorrichtung aus Fig.1

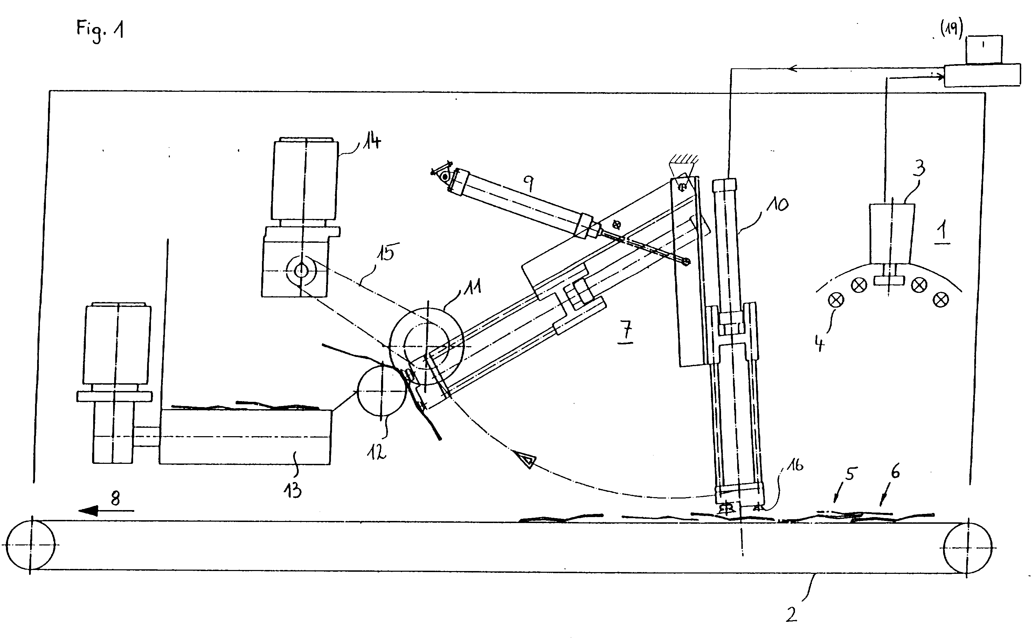

In Fig.1 ist ein kompaktes Modul 1 über dem Sortierband 2 angeordnet. Das Modul 1 umfaßt mindestens eine Kamera 3 sowie Lichtquellen 4, die wahlweise Licht mit unterschiedlicher Wellenlänge aussenden. In Richtung der Förderrichtung 8 des Sortierbandes 2 sind oberhalb und im wesentlichen quer zum Sortierband 2 Aufnehmer 7 angeordnet, die mit einer Hub- 10 und Schwenkeinrichtung 9 versehen sind. Mehrere dieser Aufnehmer 7 sind entlang der gesamten Breite des Sortierbandes 2 angeordnet. Jeder Aufnehmer 7 ist mit Saug-, Stech-, Klemm- oder einer elektrostatischen Aufnahmevorrichtung 16 zur Aufnahme der Fraktionen versehen.

Weiters sind in Förderrichtung 8 gesehen mittels Motoren 14, 16 angetriebene Klemmwalzen 11, 12 angeordnet, die ein exaktes und schnelles Einziehen und Weitertransportieren der von den Aufnehmern gelieferten, ausgewählten Altpapierfraktionen garantiert. Anschließend an die beiden Walzen 11, 12 ist ein Austrageband 13 im wesentlichen quer zum Sortierband 2 angeordnet und mit einem Motor 17 verbunden.

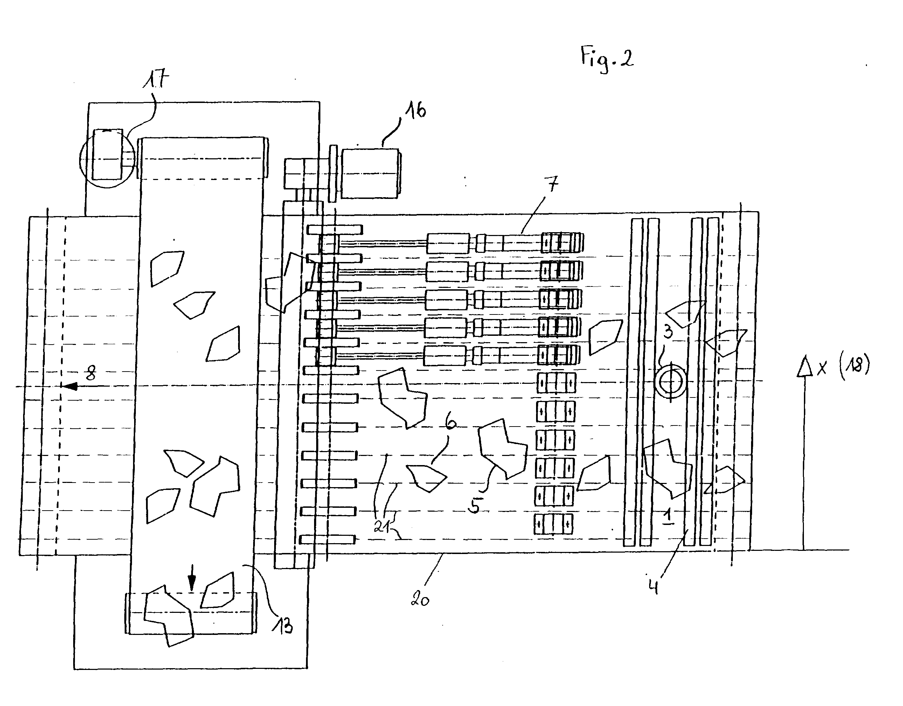

Fig.2 zeigt einen Grundriß der erfindungsgemäßen Vorrichtung zum Trennen von Altpapier und Altkarton aus Fig.1.

Die Funktionsweise der erfindungsgemäßen Vorrichtung zum Trennen von Altpapier und Altkarton wird im Folgenden beschrieben:

Die Altpapierfraktionen 5, 6 liegen auf dem Sortierband 2 auf und werden unter dem kompakten Modul 1 vorbeitransportiert. Dabei werden beide mit Licht aus den Lichtquellen 4 wahlweise mit unterschiedlicher Wellenlänge bestrahlt. Das an den einzelnen Fraktionen 5, 6 reflektierte Licht wird von der Kamera 3, die mit einer zentralen Prozessoreinheit 19 verbunden ist, aufgenommen und zur Verarbeitung und zur genauen Lagebestimmung der jeweiligen gewünschten Fraktion mittels der oben genannten Kriterien verwendet.

Wird ein genügend großer Bereich als einer bestimmten Fraktion zugehörig erkannt, so fährt ein, in derselben Spur wie die Fraktion liegt, angeordneter Aufnehmer 7, der von der zentralen Prozessoreinheit 19 gesteuert wird, mittels Hubeinrichtung 10, zu jenem Zeitpunkt, da die als auszusortierend eingestufte Fraktion in seinem Arbeitsbereich angelangt ist, nach unten nimmt die Altpapierfraktion mit einem der oben genannten Mittel auf. Dann hebt er diese auf und schwenkt sie, in Förderrichtung 8 gesehen, mittels Schwenkeinrichtung 9 zu den ebenfalls oberhalb des Sortierbandes 2 angeordneten Klemmwalzen 11, 12. Der Karton wird nun zwischen der Klemmwalze 11 und der darunter angeordneten Klemmwalze 12 eingezogen, während der Aufnehmer die Fraktion freigibt und in seine Ruheposition zurückfährt.

Die Klemmwalzen 11, 12 transportieren alle aussortierten, von den Aufnehmern bereitgestellten Altpapierfraktionen, unabhängig von ihrer Größe, zum Austrageband 13, das wiederum die Altpapierfraktionen zu einem von der Förderrichtung des mittels Motor 17 angetriebenen Austragebands 13 abhängigen, links oder rechts vom Sortierband 2 liegenden Abwurfschacht transportiert.

Der große Vorteil der Erfindung liegt in der schnell und exakten Lagebestimmung der einzelnen Altpapierfraktionen unterschiedlicher Beschaffenheit auf dem Sortierband und des darauffolgenden automatisierten Aussortierens durch die Aufnehmer 7. Ein zusätzliches, aufwendiges händisches Sortieren ist nicht mehr erforderlich.

## Patentansprüche

1. Verfahren zum Sortieren von Altpapier unterschiedlicher Qualität und Beschaffenheit, insbesonders von Altpapier und Altkarton, wobei die Altpapierfraktionen auf einem Sortierband (2) getrennt werden, **dadurch gekennzeichnet,** daß mindestens ein Bereich des die Altpapierfraktionen transportierenden Sortierbandes (2) durch eine Strahlungsquelle (4), vorzugsweise eine Lichtquelle, bestrahlt wird, wobei die einer Fraktion zugeordneten Altpapierstücke lagemäßig auf dem Sortierband (2) aufgrund der jeder Fraktion anhaftenden, unterschiedlichen Wellenlänge der reflektierten Strahlen durch mindestens eine Auswertevorrichtung (3) erfaßt werden und die einer bestimmten Fraktion zugeordneten Altpapierstücke von Aufnehmern (7) aufgenommen und an einen vorbestimmten Ablageplatz (13) abgelegt werden.

2. Verfahren nach Anspruch 1, **dadurch gekennzeichnet,** daß das Sortierband vorzugsweise mit konstanter Geschwindigkeit bewegt wird und der von der Strahlungsquelle erfaßte Bereich, in mehrere zu den Kanten (20) des Sortierbandes parallele, als Spuren (21) ausgebildete Unterbereiche (21) unterteilt wird, wobei jedem dieser Unterbereiche (21) ein Aufnehmer (7) zum Auf- und Wegheben der gewünschten Altpapierfraktionen an den vorbestimmten Ablageplatz (13) zugeordnet ist.

3. Verfahren nach Anspruch 1 und 2, **dadurch gekennzeichnet,** daß Gruppen von Auswertevorrichtungen (3), Strahlungsquellen (4) und den einzelnen Spuren (21) zugeteilten Aufnehmern (7) in Förderrichtung (8) des Sortierbandes (2) hintereinander angeordnet sind.

4. Verfahren nach Anspruch 1 bis 4, **dadurch gekennzeichnet,** daß die von der Auswertevorrichtung (3) empfangenen Daten einem Prozessor (19) zugeführt und von diesem ausgewertet werden und mittels der sich so ergebenden Sortierbandpositionsdaten (18) der in der entsprechenden Spur befindliche Aufnehmer (7) zum Aufnehmen des Altpapierstückes aktiviert wird.

5. Vorrichtung zur Durchführung des Verfahrens nach einem der Ansprüche 1 bis 4 , **dadurch gekennzeichnet,** daß über dem Sortierband (2) mindestens eine Strahlungsquelle (4) sowie mindestens eine Auswertevorrichtung (3), vorzugsweise in Form eines kompakten Moduls (1) angeordnet sind, wobei dem Modul (1) in Förderrichtung (8) des Sortierbandes gesehen Aufnehmer (7) und diesen ein Ablageplatz (13) nachgeordnet sind.

6. Vorrichtung nach Anspruch 5, **dadurch gekennzeichnet,** daß die Strahlungsquelle (4) elektromagnetische Strahlen im ultravioletten, infraroten, sichtbaren oder Röntgenbereich des Spektrums aussenden kann.

7. Vorrichtung nach einem der Ansprüche 5 oder 6, **dadurch gekennzeichnet,** daß die Auswertevorrichtung (3) eine Kamera ist, die die reflektierte Strahlung unterschiedlicher Wellenlänge verarbeitet.

8. Vorrichtung nach einem der Ansprüche 5 bis 7, **dadurch gekennzeichnet,** daß eine Mehrzahl von Aufnehmern (7) in einem Winkel, vorzugsweise quer zur Förderrichtung (8) des Sortierbandes (2) in Übereinstimmung mit dessen einzelnen Spuren (21) über dem Sortierband (2) angeordnet sind und jeder Aufnehmer (7) eine Hub- (9) und Schwenkvorrichtung (10) zur Bewegung in einer im wesentlichen normal zum Sortierband (2) und parallel zu dessen Kanten (20) liegenden Ebene umfaßt.

9. Vorrichtung nach einem der Ansprüche 5 bis 8, **dadurch gekennzeichnet,** daß jeder Aufnehmer (7) mit mechanischen Greifzangen (16), Saugern (16), Nadelgreifern (16) oder elektrostatischen Aufnahmevorrichtungen (16) ausgerüstet ist.

10. Vorrichtung nach einem der Ansprüche 5 bis 9, **dadurch gekennzeichnet,** daß der Ablageplatz (13) ein in einem Winkel, vorzugsweise quer zum Sortierband (2), angeordnetes Austrageband (13) ist.

11. Vorrichtung nach einem der Ansprüche 5 bis 10, **dadurch gekennzeichnet,** daß zwischen dem Austrageband (13) und den Aufnehmern (7) ein Klemmenwalzenpaar (11, 12) in einem Winkel, vorzugsweise quer zum Sortierband (2), angeordnet ist.

12. Vorrichtung zur Durchführung des Verfahrens nach einem der Ansprüche 1 bis 3, **dadurch gekennzeichnet,** daß die jeweiligen Altpapierfraktionen bestimmter Qualität mittels Aufnehmer (7) vom Sortierband (2) zum Klemmenwalzenpaar (11, 12) und von diesem zum Austrageband (13) befördert werden.
